Europäisches Patentamt

European Patent Office

Office européen des brevets

(11) Publication number: 0 212 774
A2

# EUROPEAN PATENT APPLICATION

(21) Application number: 86303070.6

(22) Date of filing: 23.04.86

(51) Int. Cl.⁴: G06F 15/72

(30) Priority: 21.05.85 JP 106899/85

(43) Date of publication of application:
04.03.87 Bulletin 87/10

(84) Designated Contracting States:
DE FR GB

(71) Applicant: SEIKO INSTRUMENTS &
ELECTRONICS LTD.
31-1, Kameido 6-chome
Koto-ku Tokyo 136(JP)
Applicant: Yamaguchi, Fujio
5-70, Nishi Momijigaoka
Kasuga-shi Fukuoka(JP)

(72) Inventor: Yamaguchi, Fujio
5-70 Nishi Momijigaoka
Kasuga-shi Fukuoka(JP)
Inventor: Ebisawa, Ryoji
31-1, Kameido 6-chome
Koto-ku Tokyo(JP)
Inventor: Tatemichi, Takaomi
31-1, Kameido 6-chome
Koto-ku Tokyo(JP)

(74) Representative: Miller, Joseph et al
J. MILLER & CO. Lincoln House 296-302 High
Holborn
London WC1V 7JH(GB)

(54) Display system.

(57) The hidden lines and surfaces of two interfering objects to be displayed in two-dimensions, are calculated by considering the polygonal plane surfaces defining each object, dividing them into triangles, projecting one triangle of one object onto the plane of a triangle of the other object, calculating a 4 × 4 determinant of the vertex coordinates of one triangle and one vertex coordinate of the projected triangle, determining intersection points to define hidden lines and surfaces and repeating as necessary.

FIG.6

FIG.7

## "DISPLAY SYSTEM"

The present invention relates to display systems and particularly to geometric processing systems adapted for graphic display systems and geometric modeling systems.

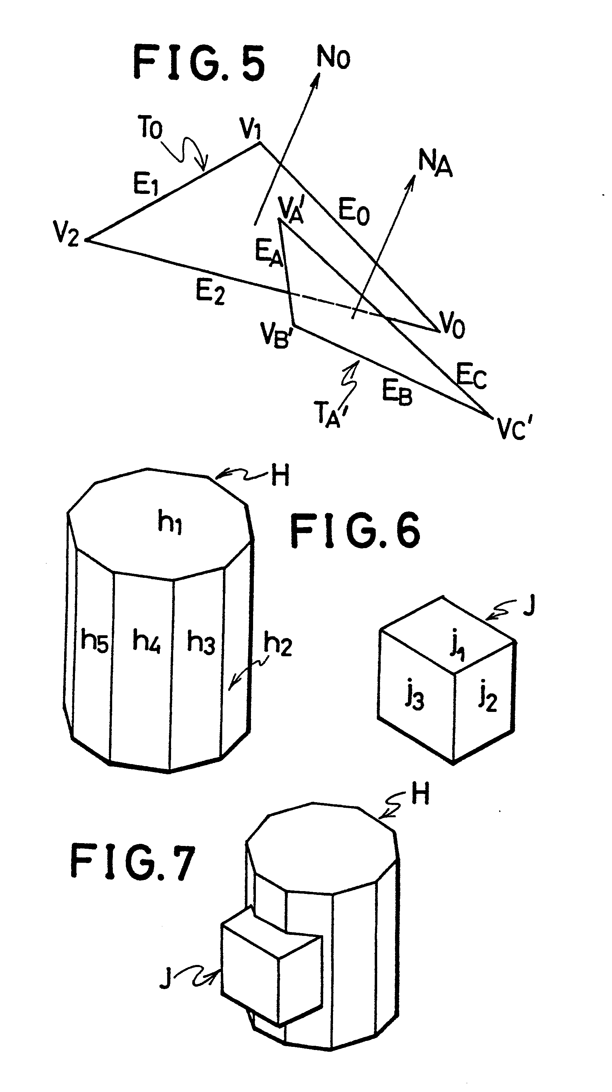

To meet the increasing demand for precisely displaying desired objects accompanying the widespread use of computer aided design (CAD) and computer aided manufacture (CAM), a two-dimensional graphic display is made to give a three-dimensional solid object impression by modelling objects H and J (Figure 6) to be displayed with a plurality of plane surfaces $h_1$ to $h_5$, and plane surfaces $j_1$ to $j_s$ dimensioned to give perspective or isometric view.

In a graphic display system or geometric modeling system used for CAD, CAM and for the production of animation, it is common practice to overlap two such independent objects as objects H and J to constitute a new object (Figure 7). In reconstituting such an object for display a problem arises in regard to processing hidden surfaces and hidden lines that stem from interference among objects and, particularly, from the positional relationships between individual objects.

Hidden surfaces and hidden lines have heretofore been processed by calculating, as data, the functions that represent boundary surfaces that constitute the model. Therefore, polygons and concave polygons having a large number of vertices could not be uniformly processed, resulting in complicated processing requiring a tremendously long period of time for calculation.

The object of the present invention is to provide a geometric processing system which is capable of systematically processing hidden surfaces and hidden lines among objects represented by a set of plane surfaces.

According to the present invention, there is provided a system for determining hidden lines and surfaces of three dimensional objects to be displayed in two dimensions, comprising means for dividing polygonal plane surfaces which form first and second geometric models, into triangles by diagonal lines drawn from vertices thereof, and which produces vertex coordinates of triangles which form the geometric models, transformation means which produces vertex coordinates of an image that is formed when one triangle produced by the triangular division means is projected onto another triangle, determinant operating means which calculates values of $4 \times 4$ determinants, and which calculates logical values among determinants, and means for calculating interference points which operates relying upon the results from the determinant operating means.

Preferably, the system includes shape determining means wherein each $4 \times 4$ determinant is constituted relying upon the vertex coordinate of said another triangle and the coordinate of another one point with respect to the figure of the projected image from said transformation means and with respect to said another triangle, the operation being performed by said operation means, said intersecting point coordinate calculation means being operated relying upon the calculated result to form a new figure, and when the shape of a newly formed figure is determined by said shape determining means to be composed of four or more vertices, the data of said figure are returned to the means for dividing into triangles.

The invention also comprises a method of determining hidden lines and surfaces of three dimensional objects to be displayed in two dimensions, comprising dividing polygonal plane surfaces of first and second geometric objects into triangles, and producing coordinates of the vertices of the triangles, transforming the vertex coordinates of a triangle of one object into coordinates of a projected triangle in the plane of a triangle of the other object, and thereafter determining interference by calculating the value of $4 \times 4$ determinants using the vertex coordinates of one triangle and the coordinates of each vertex of the projected triangle in turn.

How the invention can be carried into effect is herein particularly described with reference to the accompanying drawings, in which:-

Figure 1 is a block diagram of an embodiment of apparatus according to the present invention;

Figure 2 is a block diagram of an intersection determining/operating portion in the apparatus of Figure 1;

Figures 3 and 4 are diagrams illustrating the pre-treatment in the apparatus of the invention;

Figure 5 is a diagram illustrating the operation of the coordinate conversion portion in the apparatus;

Figure 6 is a perspective view of two objects, and

Figure 7 is a perspective view showing an example of combining the two objects of Figure 6.

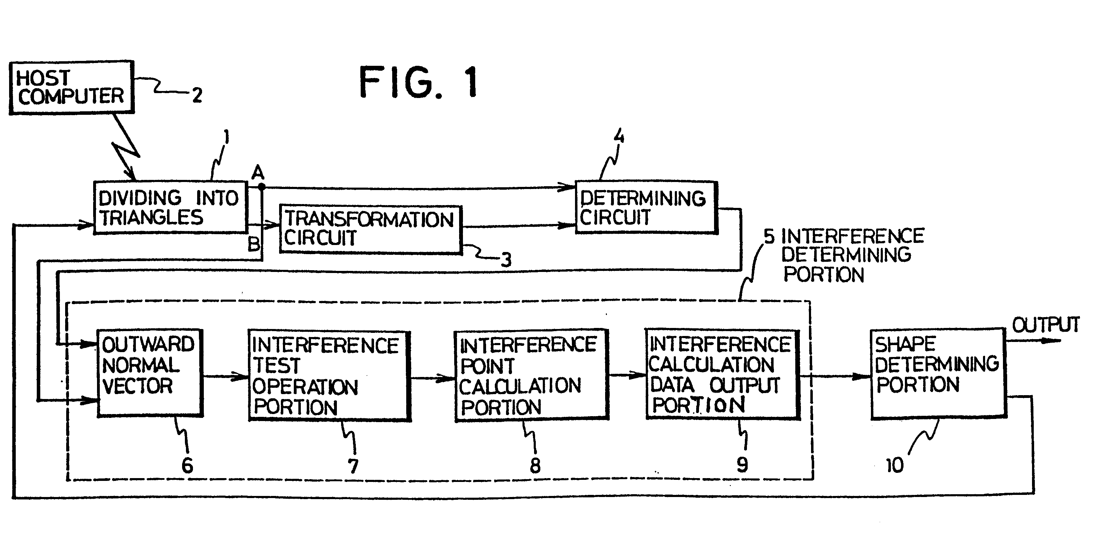

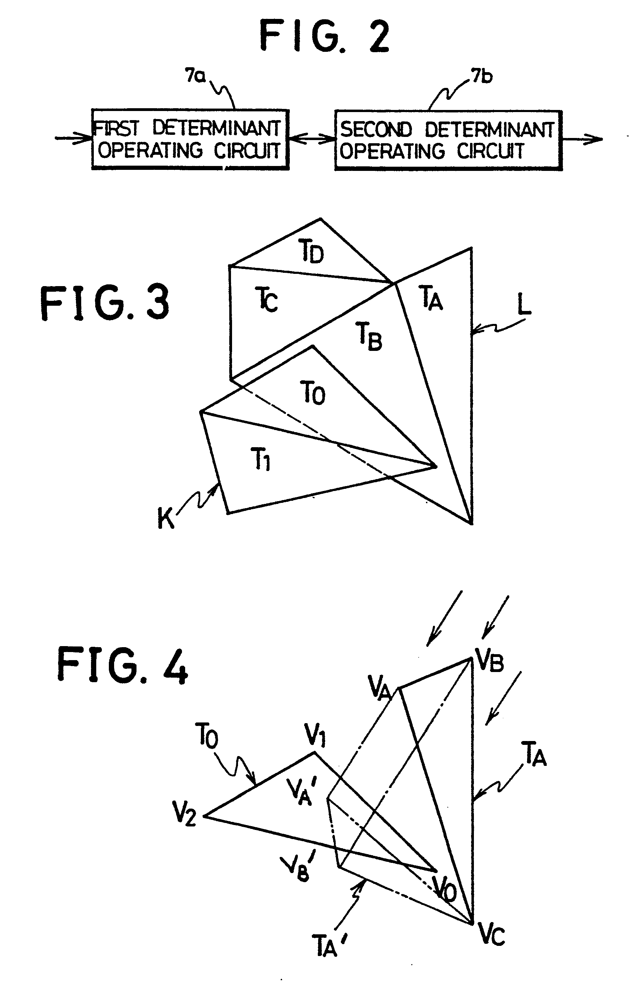

The embodiment of apparatus according to the present invention shown in Figure 1, includes a circuit 1 for dividing plane polygonal surfaces into triangles. A host computer 2 supplies coordinates of the vertices of polygons K and L (Figure 3) which define a boundary surface of an approximate polyhedron. The circuit 1 divides these polygons into triangles $T_A$ to $T_D$ and $T_0$, $T_1$, by diagonal lines

and selects for each triangle three vertices, i.e for triangle $T_0$:

$$V_0 = (X_0, Y_0, Z_0)$$

$$V_1 = (X_1, Y_1, Z_1)$$

$$V_2 = (X_2, Y_2, Z_2)$$

The circuit 1 sends these coordinates to an input data table (Table) and further sends the coordinates of three vertices of a triangle $T_A$, i.e.

$$V_A = (X_A, Y_A, Z_A)$$

$$V_B' = (X_B, Y_B, Z_B)$$

$$V_C = (X_C, X_C, Z_C)$$

that may interfere with the triangle $T_0$, to a transformation circuit 3.

The transformation circuit 3 develops the coordinates of three vertices, i.e.

$$V_A' = (X_A', Y_A', Z_A')$$

$$V_B' = (X_B', Y_B', Z_B')$$

$$V_C' = (X_C', Y_C', Z_C')$$

of a triangle $T_A'$ which may interfere with the tri-angle $T_0$ when the triangle $T_A$ is projected onto the plane that includes the displayed triangle $T_0$. The transformed co-cordinates are then sent to the input data table (Table 1)

## TABLE 1

| Triangle $T_0$ | Vertex $V_0$ | $X_0$ | | Triangle $T_A'$ | Vertex $V_A'$ | $X_A'$ | |
|---|---|---|---|---|---|---|---|
| | | $Y_0$ | | | | $Y_A'$ | |
| | | $Z_0$ | | | | $Z_A'$ | |
| | Vertex $V_1$ | $X_1$ | | | Vertex $V_B'$ | $X_B'$ | |
| | | $Y_1$ | | | | $Y_B'$ | |
| | | $Z_1$ | | | | $Z_B'$ | |
| | Vertex $V_2$ | $X_2$ | | | Vertex $V_C'$ | $X_C'$ | |
| | | $Y_2$ | | | | $Y_C'$ | |
| | | $Z_2$ | | | | $Z_C'$ | |

The information in Table 1 is passed to a determining circuit 4 which determines the presence or absence of interference between the tri-angles $T_0$ and $T_A'$ relying upon the configuration. Thus, the circuit 4 determines whether the dis-played triangle $T_0$ produced from the circuit 1 and the projected image of the triangle $T_A$ displayed in front thereof interfere with each other on the screen. When the triangle $T_A'$ interferes with the displayed triangle $T_0$, the determining circuit 4 sends the data related to the projected image $T_A'$ to an interference determining portion 5. When the triangle $T_A'$ does not interfere, the determining circuit 4 directly produces the data related to the triangle $T_0$.

The interference determining portion 5 includes a circuit 6 for calculating an outward normal vector. From the coordinates of the vertices of the dis-played triangle $T_0$ sent from the circuit 1 and the coordinates of the vertices of projected image $T_A'$ produced from the determining circuit 4, the circuit 6 calculates the lengths of the sides of the triangles and finds vectors (Figure 5) that represent directions of triangles with the nearest side as the positive direction whenvertices are followed in the counterclockwise direction, i.e., finds vectors of outwardly directed normals,

$$N_o = [n_X, n_Y, n_Z]$$

$$N_A = [n_X', n_Y', n_Z']$$

where,

$$n_X = \begin{vmatrix} y_0 & z_0 & 1 \\ y_1 & z_1 & 1 \\ y_2 & z_2 & 1 \end{vmatrix} \quad n_Y = \begin{vmatrix} z_0 & x_0 & 1 \\ z_1 & x_1 & 1 \\ z_2 & x_2 & 1 \end{vmatrix} \quad n_Z = \begin{vmatrix} x_0 & y_0 & 1 \\ x_1 & y_1 & 1 \\ x_2 & y_2 & 1 \end{vmatrix}$$

$$n_X' = \begin{vmatrix} y_A & z_A & 1 \\ y_B & z_B & 1 \\ y_C & z_C & 1 \end{vmatrix} \quad n_Y' = \begin{vmatrix} z_A & x_A & 1 \\ z_B & x_B & 1 \\ z_C & x_C & 1 \end{vmatrix} \quad n_Z' = \begin{vmatrix} x_A & y_A & 1 \\ x_B & y_B & 1 \\ x_C & y_C & 1 \end{vmatrix}$$

and further finds homogeneous coordinates $[n_X, n_Y, n_Z, 0]$ at infinity in the direction of an outward normal vector.

## Table 2

| | | | Triangle | | | | | | |
| --- | --- | --- | --- | --- | --- | --- | --- | --- | --- |
| | | | Sides | | | | Vertices | | |
| | | | $T_A$ | $E_A$ | $E_B$ | $E_C$ | $V_A$ | $V_B$ | $V_C$ |
| Triangle | Sides | $T_0$ | | | | | | | |
| | | $E_0$ | | | | | | | |
| | | $E_1$ | | | | | | | |
| | | $E_2$ | | | | | | | |
| | Vertices | $V_0$ | | | | | | | |
| | | $V_1$ | | | | | | | |
| | | $V_2$ | | | | | | | |

The dimensions, coordinates and vectors are passed from circuit 6 to an interference test operation portion 7 which determines the intersecting conditions among the interior, sides and vertices of a triangle by calculating a $4 \times 4$ determinant based upon vertex data of the triangle and outward normal vectors. The intersection determining/operating portion 7 further writes the interference condition onto an interference condition table (Table 2) and, at the same time, requests an interference point calculating portion 8 to calculate the coordinates of interference points.

The interference test operation portion 7 determines and calculates the intersection by solving a $4 \times 4$ determinant,

$$\begin{vmatrix} x_A & y_A & z_A & 1 \\ x_0 & y_0 & z_0 & 1 \\ x_1 & y_1 & z_1 & 1 \\ x_2 & y_2 & z_2 & 1 \end{vmatrix} \qquad \dots\dots\dots\dots\dots\dots\dots\dots\dots\dots \quad (1)$$

constituted for a plane that includes three points, i.e.

$$V_0 = (x_0, y_0, z_0)$$

$$V_1 = (x_1, y_1, z_1)$$

$$V_2 = (x_2, y_2, z_2)$$

in three-dimensional space and a given point $V_A = (X_A, Y_A, Z_A)$ hereinafter, the determinant which represents a relation between the point $V_A$ and the triangle $T_0$ defined by vertices $V_0$, $V_1$, $V_2$, is referred to as $S_{A012}$). When the determinant $S_{A012}$ is calculated to be:

(a) $S_{A012} = 0$, the point $V_A$ exists on a plane which includes the triangle $T_0$,

(b) $S_{A012} > 0$, the point $V_A$ exists outside the plane which includes the triangle $T_0$; and

(c) $S_{A012} < 0$, the point $V_A$ exists inside the plane which includes the triangle $T_0$.

The interference test operation portion 7 includes first and second determinant operating circuits 7a and 7b (Figure 2). The first determinant operating circuit 7a examines a relation between the triangle $T_0$ and the side $E_A$ that exists on a plane which includes the above triangle. The circuit 7a develops the triangle $T_0$ into three sides $E_0$, $E_1$, $E_2$, transfers them to the second determinant operating circuit 7b to determine whether the sides $E_0$, $E_1$, $E_2$ intersect the sides $E_A$, $E_B$, $E_C$ of the projected image $T_A'$. Based upon the result calculated by the circuit 7b, the interference condition is determined between the triangle $T_0$ and the triangle $T_A'$ and the result of determination is sent on to the interference condition table (Table 2).

The second determinant operating circuit 7b determines whether two segments that exist on the same plane intersect or not. That is, two triangles are imagined with one segment $E_A$ defined by two ends $V_A'$ and $V_B'$ as one side and with an end of another segment $E_0$ defined by two ends $V_0$ and $V_1$ as a vertex. By calculating $4 \times 4$ determinant, the circuit 7b determines whether the conditions,

$$
\begin{aligned}
&[\{(S_{N01A} \geq 0) \wedge (S_{N01B} \leq 0)\} \vee \\
&\{(S_{N01A} \leq 0) \wedge (S_{N01B} \geq 0)\}] \wedge \\
&[\{(S_{NAB0} \geq 0) \wedge (S_{NAB1} \leq 0)\} \vee \\
&\{(S_{NAB0} \leq 0) \wedge (S_{NAB1} \geq 0)\}]
\end{aligned} \qquad \cdots\cdots (2)
$$

hold true or not. When the conditions hold true, it is judged that the two segments intersect on a plane, and the circuit 7b requests the interference point calculating portion 8 to calculate the coordinates of interference points, and further sends the determined results to the interference condition table - (Table 2) and to the first determinant operating circuit 7a.

The interference point calculation portion 8 performs the calculation in accordance with the relation,

$P = V_A + (V_B - V_A \times S_{A012} / (S_{A012} - S_{B012})$ ·········· - (3) to find coordinates $P(x, y, z)$ of a point of intersection responsive to the request for calculating the interference point from the interference test operation portion 7, and sends the result of calculation to an interference point coordinate table (Table 3).

## Table 3

|          | $T_A$ | $E_A$ | $E_B$ | $E_C$ |
|----------|-------|-------|-------|-------|
| $T_0$    |       |       |       |       |
| $E_0$    |       |       |       |       |
| $E_1$    |       |       |       |       |
| $E_2$    |       |       |       |       |

The interference condition table (Table 2) and the interference point coordinate table (Table 3) are stored in an interference calculation data output portion 9 from the outputs of the interference test operation means 7 and the interference point calculation portion 8. The portion 9 produces an output responsive to a request from a shape determining portion 10. The shape determining portion 10 determines the shape of an object which is newly formed by the calculation. When the object is determined to be a polygon or a concave polygon, the data of new object are returned back to the portion 1 for dividing into triangles.

## Table 4

| | $T_0$ | $T_A$ |
|---|---|---|
| A | | |
| V | | |
| N | | |
| | | |
| | | |

Described below is the operation of the thus constituted system.

As the data of two independent objects to be displayed are produced from the host computer 2, the circuit 1 divides each of the polygons into a plurality of triangles by diagonal lines, and stores, in the input data table, the coordinates that represent vertices $V_0$, $V_1$, $V_2$ of a triangle $T_0$ which forms part of the object to be displayed. The circuit 1 further produces to the transformation circuit 3 the coordinates of vertices $V_A$, $V_B$, $V_C$ of a triangle forming part of an object that is located in front of and may interfere with the triangle $T_0$, finds the coordinate of the projected image $T_A'$ thereof, and stores it in the input data table.

The data related to the displayed triangle $T_0$ and the projected image $T_A'$ are sent to the determining circuit 4 which determines whether the triangle $T_A$ is interfering with the triangle $T_0$. When the triangle $T_A$ is not interfering, the trian $T_0$ is displayed without being changed. When the triangle $T_A$ interferes with the triangle $T_0$, on the other hand, the portion 1 produces the data related to the projected image $T_A'$ of triangle $T_A$ to the interference determining portion 5.

The circuit 6 calculates vectors $N_0$, $N_A$ of outwardly directed normals based upon the coordinate data of the triangle $T_0$ and the projected image $T_A'$. The interference test operation portion 7 determines the intersection upon receipt of the coordinates of the vertices $V_0$, $V_1$, $V_2$ of the triangle $T_0$ and vector $N_0$ of the outwardly directed normal, as well as coordinates of the vertices $V_A'$, $V_B'$, $V_C'$ of the projected image $T_A'$ and vector $N_A$ of the outwardly directed normal.

The first determinant operating circuit 7a develops the displayed triangle $T_0$ into three sides $E_0$, $E_1$, $E_2$ and vertices $V_0$, $V_1$, $V_2$, develops the projected image $T_A'$ into three sides $E_A$, $E_B$, $E_C$ and vertices $V_A'$, $V_B'$, $V_C'$ and temporarily transfers control to the second determinant operating circuit 7b. Based upon the data of sides $E_0$, $E_1$, $E_2$ of the triangle $T_0$ and sides $E_A$, $E_B$, $E_C$ of the projected image $T_A'$ received from the first determinant operating circuit 7a, the second determinant operating circuit 7b determines whether the sides $E_0$, $E_1$, $E_2$ forming the triangle $T_0$ intersect the sides $E_A$, $E_B$, $E_C$ which form the projected image $T_A'$. The second determinant operating circuit 7b then requests the interference point calculation portion 8 to calculate the coordinates of points of intersection for those sides that are intersecting.

The calculated results are stored in the interference condition table (Table 2), and coordinates of interference points are stored in the interference point coordinate table (Table 3) in the portion 9. Based upon the calculated results, the shape determining circuit 10 determines a portion concealed by the triangle $T_A$ among the data representing the triangle $T_0$, forms a new object, and further determines the shape of an object after the hidden surfaces have been processed. When the object contains a plurality of triangles, i.e., when the polygonal object has four or more vertices, the data related to the object are returned again to the circuit 1 and the operation is repeated in relation to the other triangles forming an object that is located on the nearest side.

The operation is repeated thereafter in respect to the other triangles of the further object and the hidden surfaces and hidden lines among the objects are processed through a quick and systematic procedure.

As described above, polygonal plane surfaces of an object which is to be examined to determine whether it is interfered with by another object to be displayed is divided into triangles by diagonal lines drawn from the vertices, and data obtained concerning vertex coordinates, outward normal vectors and infinity points of vectors. Thereafter, interference among complex objects can be determined through systematic processing by calculating $4 \times 4$ determinants.

**Claims**

1. A system for determining hidden lines and surfaces of three dimensional objects to be displayed in two dimensions, comprising means (1) for dividing polygonal plane surfaces which form first and second geometric models, into triangles by diagonal lines drawn from vertices thereof, and which produces vertex coordinates of triangles which form the geometric models, transformation means (3) which produces vertex coordinates of an image that is formed when one triangle produced by the triangular division means (1) is projected onto another triangle, determinant operating means (7a, 7b) which calculates values of $4 \times 4$ determinants, and which calculates logical values among determinants, and means (8) for calculating interference points which operates relying upon the results from the determinant operating means.

2. A system according to claim 1, including shape determining means (10), wherein each $4 \times 4$ determinant is constituted relying upon the vertex coordinate of said another triangle and the coordinate of another one point with respect to the figure of the projected image from said transformation means (3) and with respect to said another triangle, the operation being performed by said operation means (7), said intersecting point coordinate calculation means (8) being operated relying upon the calculated result to form a new figure, and when the shape of a newly formed figure is determined by said shape determining means (8) to be composed of four or more vertices, the data of said figure are returned to the means (1) for dividing into triangles.

3. A method of determining hidden lines and surfaces of three dimensional objects to be displayed in two dimensions, comprising dividing polygonal plane surfaces of first and second geometric objects into triangles, and producing coordinates of the vertices of the triangles, transforming the vertex coordinates of a triangle of one object into coordinates of a projected triangle in the plane of a triangle of the other object, and thereafter determining interference by calculating the value of $4 \times 4$ determinants using the vertex coordinates of one triangle and the coordinates of each vertex of the projected triangle in turn.

# FIG. 1

HOST COMPUTER — 2

DIVIDING INTO TRIANGLES — 1

A

B

TRANSFORMATION CIRCUIT — 3

DETERMINING CIRCUIT — 4

5 INTERFERENCE DETERMINING PORTION

OUTWARD NORMAL VECTOR — 6

INTERFERENCE TEST OPERATION PORTION — 7

INTERFERENCE POINT CALCULATION PORTION — 8

INTERFERENCE CALCULATION DATA OUTPUT PORTION — 9

SHAPE DETERMINING PORTION — 10

OUTPUT

1/3

# FIG. 2

7a — FIRST DETERMINANT OPERATING CIRCUIT

7b — SECOND DETERMINANT OPERATING CIRCUIT

# FIG. 3

# FIG. 4

# FIG.5

# FIG.6

# FIG.7